Europäisches Patentamt

European Patent Office

Office européen des brevets

(19)

(11) Publication number: **0 027 273**
**B1**

(12) **EUROPEAN PATENT SPECIFICATION**

(45) Date of publication of patent specification: **18.01.84**

(21) Application number: **80106221.7**

(22) Date of filing: **13.10.80**

(51) Int. Cl.³: **B 29 D 7/22,** C 08 J 5/00, D 01 C 5/00

(54) **Fibrillated and orientated reinforcement films made of at least one film-forming, orientable synthetic polymer, process for the preparation of such films and hydraulic binder-based products containing these films.**

(30) Priority: **12.10.79 IT 2646379**

(43) Date of publication of application:
**22.04.81 Bulletin 81/16**

(45) Publication of the grant of the patent:
**18.01.84 Bulletin 84/3**

(84) Designated Contracting States:
**AT BE CH DE FR GB LI NL SE**

(56) References cited:
**FR - A - 2 252 194**
**US - A - 3 903 234**

(73) Proprietor: **Montedison S.p.A.**
**Patents & Licensing Dept. Foro Buonaparte, 31**
**P.O. Box 10528**
**I-20121 Milan (IT)**

(72) Inventor: **Camprincoli, Pierpaolo, Dr.**
**73, Via Guglielmi**
**Terni (IT)**
Inventor: **Marcaccioli, Enzo, Dr.**
**4/a, Via Amerigo Vespucci**
**Perugia (IT)**
Inventor: **Rosati, Luciano**
**4, Via Termine**
**Stroncone (Terni) (IT)**

(74) Representative: **Zumstein, Fritz jun., Dr. et al,**
**Dr. F. Zumstein sen. Dr. E. Assmann Dr. R.**
**Koenigsberger Dipl.-Ing. F. Klingseisen Dr. F.**
**Zumstein jun. Bräuhausstrasse 4**
**D-8000 München 2 (DE)**

# 0 027 273

Fibrillated and orientated reinforcement films made of at least one film-forming, orientable synthetic polymer, process for the preparation of such films and hydraulic binder-based products containing these films

The present invention concerns improved fibrillated or net-like structures consisting of synthetic polymers, suited for being used as reinforcement in hydraulic binders. Moreover, it relates to the process for the preparation and to the hydraulic binder-based manufactured products containing said structures.

It is known from English Patent No. 1.073.741, to prepare flat or tubular net-shaped structures consisting of longitudinally oriented interlaced synthetic polymers, by producing with the help of suitable cutting devices, a series of spaced, parallel slots in an either flat or tubular, mono-oriented polymer film, so that the successive transversal expansion of the slitted film will produce such a net-like structure.

Net-shaped structures of an analogous type, although consisting of filaments interlaced in a much more irregular and casual manner, may be obtained furthermore, by disaggregation or by slitting of the mono-oriented polymeric films, with different methods, such as for instance by sand-blasting, brushing or rubbing.

The products thus obtained, in general are bulky and flexible, and are used for manufacturing ropes, cords and strings and textile materials of various kinds.

Moreover, it is also known from Spanish Patent No. 460.292 to use structures of that kind opened by transversal or cross-expansion, in manufactured products based on inorganic, hydraulic binders, in order to obtain an improvement of their mechanical characteristics.

Given the chemical incompatibility of the synthetic polymers in general for the inorganic materials that form the hydraulic binders, the polymeric structures thus used hardly adhere to the matrix of the binder, wherefore the reinforcing action is not altogether effective.

In English Patent No. 1.316.661, filed on 8.4.'70 in the name of Tomoji Murata, there is described a process aimed at improving the characteristics of the manufactured products made of hydraulic binders, by means of a reinforcement with synthetic polymeric fibres additioned with 20—80% of cements.

In such a case the fibres are of the traditional type with a high count (greater than 50 denier), and are cut into 5—30 mm long staples.

Similar fibrous compositions, to be used as reinforcement of manufactured products from hydraulic binders, are also claimed in Japanese Pat. Appln. No. 74/48.721, published May 11, 1974, filed in the name of Mitsubishi Petrochemical.

The use of this kind of reinforcement caused problems in the production of the fibres with regard to the high percentage of additive present, and does not allow to obtain manufactured products from hydraulic binders, that will have satisfactory characteristics. More particularly, the resistance to bending of the reinforced manufactured products is only slightly higher than that of the non-reinforced ones.

It has now been found by the Applicant, that the mechanical characteristics of the manufactured products based on inorganic hydraulic binders may be considerably improved by using as a reinforcement net-like structures of the above described type, containing quantities of between 1% and 20% by weight of a cement-based material; just as will be defined further on.

One of the objects of this invention is that of providing fibrillated films, or flat net-like structures of synthetic polymers containing incorporated from 1% to 20% by weight of at least one cement-based material.

A further object of this invention is that of providing the process for the preparation of such films or structures. Still another object of the invention is that of providing manufactured products of cement or other inorganic hydraulic binders containing incorporated such films or structures.

Preferably, the fibrillated films or flat net-shaped structures according to this invention, show a specific surface area of at least 0.20 $m^2/g$ and even more preferably between 0.25 and 1.3 $m^2/g$.

These materials may consist of any orientable, film-forming synthetic polymer, amongst which may be cited, for exemplifying purposes; polyolefines, polyamides, vinyl polymers, polyester resins, and mixtures of such polymers, and in particular the olefinic polymers prepared with stereospecific catalysts such as for instance polypropylene prevailingly formed by isotactic macromolecules, polyethylene, the crystalline ethylene-propylene copolymers with a prevailing content of propylene, both of the random as well as of the block type, or mixtures thereof.

Particularly convenient for the preparation of structures according to this invention are the polypropylene blends with up to 20% by weight, on the blend with the polypropylene, of polyethylene of the low-density type, and/or of ethylene-propylene copolymers.

By the expression "cement-based material" are comprised all the inorganic powdery materials that are usually present or that may be used in the compositions of hydraulic binders, and in particular hydraulic or water limes, pozzuolanic cements, Portland cements, metallurgical cement, aluminous cements, diatomites or fossil meals, sands and silicon materials in general, as well as blends or mixtures of such products.

As diatomites, there may be used those containing at least 50% by weight of silica; particularly convenient proved to be the diatomites known by the commercial name of "Celite" (trade mark registered under the name of Johns-Manville Corp.).

One preferred method for the preparation of the structures according to this invention consists of the following operations, in the given order:

(a) preparation of a mix or blend of at least one film-forming and orientable synthetic polymer, with 1—20% by weight, on that mix, of a powdery cement-based material, possibly but not necessarily, with 0.05—0.5% by weight of an expanding blowing agent;

(b) transformation of the mix or blend into a flat or tubular film;

(c) orientation of this film in a longitudinal or prevailingly longitudinal direction, by mechanical stretching, with stretch ratios comprised between 1:3 and 1:15, with the formation of an oriented film having a thickness comprised between 20 and 200 microns;

(d) fibrillation of the oriented film.

Examples of expanding or swelling agents in the mix or blend of point (1) are: azo-dicarbonamide, azo-bis-isobutirronitrile, di-nitrous-pentamethylene-tetramine, sodium bicarbonate and the like.

The preparation of the film from the mix of polymer and cement-based materials may be carried out according to known procedures or methods, such as for instance by extrusion or by casting.

The orienting operation (c) of the film may be achieved by hot-stretching between sets of slow- and fast-revolving rollers. The fibrillation of the oriented film is achieved by means of slitting, which is preferably carried out by allowing the film to pass over surfaces fitted with slitting elements such as blades, pins or needles, and the like, according to the techniques described in British Pat. No. 1.073.741.

High values of specific surface area may be attained by such a slitting operation, and preferably by subjecting the film, before the slitting, to additional treatments such as for instance the superficial abrasion with brushes, sandblasting and the like.

In this connection some techniques have been described, for instance, in European Patent Application 80102722.8 of May 16, 1980, filed in the name of Montedison and Moplefan.

Once the fibrillated films or the net-like structures of this invention have been obtained, they may be made wettable by oxidative superficial treatments such as, for instance, the known treatments by flame or those by high frequency electrical discharges, and moreover they may be dimensionally stabilized.

The fibrillated or net-like structured films of this invention, may be in the form of either single elements or in the form of packages of a plurality of superimposed fibrillated films, one above the other, variously arranged whereby the single films are free with respect to each other or are welded to each other.

Such structures may be used as reinforcement in all types of inorganic hydraulic binders, such as for instance, Portland cements, aluminous cements, hydraulic limes, gypsum.

In the details of this invention there may be introduced wide variations and changes, without thereby falling without the scope of the inventive idea of this invention.

In the following will now be given a set of illustrative but not limiting examples of this invention.

Example 1

There was prepared a mix or blend by mixing together in a 100 lt Battagion type mixer:—

| | |
|---|---|
| polypropylene in flakes (melt index=10; ashes=75 ppm; residue at heptanic extraction: 97.5%) | 35 kg |
| low density polyethylene | 3 kg |
| Portland 425 cement | 2 kg |

This mix or blend was then granulated at 210°C and the ensuing granulate was extruded as a flat film.

The film thus obtained was thereupon stretched in a longitudinal direction, with a stretch ratio of 1:8.5, at a temperature of 130°C.

The thickness of the stretched film was equal to 60 microns.

The mono-stretched film was thereupon slitted by passing it over a fibrillating needle roller. Thereby was obtained a fibrillated film which had a specific superficial area of 0.25 $m^2/g$ determined by absorption of gaseous Krypton. The net-like structure thus formed was opened to an opening ratio of 1:9.

Thereupon it was proceeded to the dimensional stabilization of the open reticular structure, by heat treatment at 125°C for 5 (five) minutes.

There were then prepared composite plates, by alternating layers of said reticular structures or nets to layers of Portland 325 cement mixed with water in a weight of water/cement ratio equal to 0.35:1, using 120 nets (with a net/cement volume ratio of 9:91), thereupon allowing said plates to rest for 24 hours, and then allowing them to age for 28 days at 25°C.

The three-point bending stress resistance, on test pieces cut off from said plates in the sense of orientation of the films, was determined according to UNI-3948 standards, and amounted to 305 kg/cm² (30.5 MN/m²).

Composite plates, prepared in a similar way, but using 60 instead of 120 nets, with a volumetric ratio net/cement of 5:95, showed a three point bending stress resistance that was equal to 280 kg/cm² (28 MN/m²).

On the contrary, a comparative plate, prepared by using fibres of 50 dtex, obtained from the same blend, and with a volumetric ratio, fibre/cement, equal to 5:95, displayed a three point flexing resistance of 110 kg/cm² (11 MN/m²).

Example 2

It was operated as in Example 1, except that the starting mix or blend contained 34.2 kg of polypropylene and 2.8 kg of Portland 425 cement, besides 3 kg of low-density polyethylene, and that the fibrillated film showed a specific surface area of 0.33 m²/g.

The three points bending stress resistance, taken on test pieces cut off from the said composite plates in the direction of orientation of the film, according to UNI-3848 standards, proved to be equal to 320 kg/cm² (32 MN/m²).

Example 3

It was proceeded as in Example 1, except that the starting blend consisted of 33.4 kg of polypropylene, 3 kg of low density polyethylene and of 3.6 kg of Portland 425 cement, and that the fibrillated film had a specific surface area of 0.42 m²/g. The three-points bending stress resistance test was carried out on test pieces cut off from composite plates according to the direction of the orientation of the film, according to UNI-3948 standards, and it proved to be equal to 325 kg/cm² (32.5 MN/m²).

Example 4

A blend was prepared by mixing together in a 100 lt Battagion mixer:—

| | |
|---|---|
| polypropylene in flakes (melt index=10; ashes=75 ppm; residue at heptanic extraction=97.5%) | 35 kg |
| low-density polyethylene | 3 kg |
| hydraulic lime | 2 kg |
| azo-dicarbonamide (blowing agent) | 0.1 kg |

This blend was thereupon extruded to a flat film.

This film was then stretched in a longitudinal direction with a stretching ratio of 1:9; at a temperature of 130°C. The thickness of the film was equal to 60 microns.

The mono-stretched film was slitted by passing it over a fibrillating needle-roller. Thereby was obtained a fibrillated film that had a specific surface area of 0.45 m²/g determined by absorption of gaseous Krypton.

The net-like structure that thus was formed, was then opened with an opening ratio equal to 1:9.

Thereupon it was proceeded with the dimensional stabilization of the open reticular structures by thermal treatment at 125°C, for 5 minutes.

On the composite plates, obtained by alternating layers of reticular structures with layers of Portland 325 cement, mixed with water in a ponderal ratio, water/cement, of 0.3/1, by using 120 reticular structures (with a volumetric ratio, reticular structure/cement, equal to 9:91), allowing the blend to rest for 24 hours, and by then allowing it to set for 20 days at 25°C, the three-points bending stress resistance, taken on test pieces cut off in the sense of the direction of orientation of the film, according to UNI-3948 standards, proved to amount to 350 kg/cm² (35 MN/m²).

Example 5

There was prepared a blend by mixing together in a 100 lt Battagion mixer:

| | |
|---|---|
| polypropylene in flakes (melt index: 12; ashes=75 ppm; residue at the heptanic extraction=97.5% | 34.8 kg |
| low density polyethylene | 3.2 kg |
| "Celite"(*) diatomite | 2.0 kg |

(*)"Celite" of the "Superfine Superfloss", having an apparent density of about 0.2 g/cm³, and having the following percentual by weight composition:—

| | | | |
|---|---|---|---|
| silica | 91.9% b.w. | titanium oxide | 0.3 |
| alumina | 3.3% b.w. | calcium oxide | 0.5 |
| iron oxide | 1.3% b.w. | magnesium oxide | 0.5 |
| | alkali 2.0% b.w. | | |

4

# 0 027 273

From this blend, operating like in Example 1, a fibrillated film was prepared, having a specific surface area of 0.33 m²/g, which film, after opening with an opening ratio of 1:9 and after a dimensional stabilization, was used for preparing composite cement plates.

These cement plates were obtained by alternating layers of reticular structures with Portland 325 cement mixed with water in a ponderal ratio, water/cement, equal to 0.3:1, by using 130 recticular structures (volumetric ratio, reticular structure/cement, equal to 8:92), allowing the plates to rest for 24 hours and by then allowing it to ripen for 28 days at 25°C.

The three-points bending stress resistance of the plates, measured on the test pieces cut off in the direction of orientation of the film, according to UNI-3948 standards, amounted to 300 kg/cm² (30 MN/m²).

Composite plates prepared in a similar way, but containing 60 nets instead of 120 nets, with a volumetric ratio, nets/cement, equal to 5:95, showed a three-points bending stress resistance of 270 kg/cm² (27 MN/m²). On the other hand, comparative plates, prepared by using as reinforcement 2.8 dtex fibres obtained from the same mix or blend, with a volumetric ratio, fibres/cement, of 5:95 showed a three points bending stress resistance of 118 kg/cm² (11.8 MN/m²).

Example 6

It was proceeded as in Example 5, except that the blend consisted of 32.8 kg of polypropylene, 3.2 kg of low-density polyethylene and of 4.0 kg of the same "Celite", and that, moreover, the fibrillated film had a specific surface area of 0.4 m²/g.

The three-points bending stress resistance of the composite cement plates, prepared by using the net-like structures of this example, and following the same procedures as those of Example 5, measured on test pieces cut off along the direction of orientation of the film, turned out to be equal to 350 kg/cm² (35 MN/m²).

Example 7

It was proceeded as in Example 5, except that the starting blend consisted of: 30.8 kg of polypropylene, 3.2 kg of low-density polyethylene and 6.0 kg of the same "Celite", and that the fibrillated film had a specific surface area of 0.45 m²/g.

In this case the three-points bending stress resistance of the plates, measured on test pieces cut off along the direction of orientation of the film, according to UNI-3948 standards, proved to amount to 360 kg/sq.cm.

Example 8

It was operated as in Example 5, except that the starting blend contained also 0.04 kg of azo-dicarbon-amide as an expanding or blowing agent, and that the fibrillated film thus obtained displayed a specific surface area of 0.51 m²/g.

In the present case, the three-points bending stress resistance carried out according to UNI-3948 standards, on test pieces cut off along the line of orientation of the film, proved to amount to: 350 kg/cm² (35 MN/m²).

Example 9 (Comparative Example)

There was prepared a blend by mixing together in a 100 lt Battagion mixer:

| | |
|---|---|
| polypropylene in flakes (melt index: 12; ashes: 75 ppm; residue at the heptanic extraction: 95.5%) | 36.8 kg |
| low density polyethylene | 3.2 kg |

This blend was then granulated at 210°C and the granules were extruded to form a flat film.

This film was thereupon stretched in a longitudinal direction with a stretching ratio equal to 1:8.5, at a temperature of 130°C.

The thickness of the stretched film amounted to 60 microns.

This mono-stretched film was then slitted by passing it over a fibrilling needle-roller. Thereby was obtained a fibrilled film which represents a specific surface area of 0.2 m²/g, determined by absorption of gaseous Krypton. The net-like structure thus formed, was opened in an opening ratio of 1:9.

Thereupon was proceeded with the dimensional stabilization of the opened reticular structure, by means of a heat-treatment at 125°C for 5 minutes.

In composite plates obtained by alternating layers of reticular structures with layers of Portland 325 cement, mixed with water in a ponderal ratio, water/cement, of 0.3:1, and by using 130 reticular structures (volumetric ratio, reticular structure/cement=8.92), and by then allowing the composite plates to rest for 24 hours and by then allowing them to ripen for 28 days at 25°C, the three-points flexing resistance measured on test pieces cut off along the line of orientation of the film, according to UNI-3948, was found to amount to 225 kg/cm² (22.5 MN/m²).

5

# 0 027 273

## Claims

1. Fibrillated and orientated reinforcement films or flat net-shaped structures made of at least one film-forming, orientable synthetic polymer, which in use reinforce hydraulic binder-based conglomerates, characterized in that said films or structures contain incorporated from 1—20% b.w. of at least one cement-based material.

2. Films or structures according to claim 1, characterized in that the synthetic polymer consists of polypropylene.

3. Films or structures according to claim 1, characterized in that the synthetic polymer consists of a mix or blend of polypropylene with up to 20% by weight of low-density polyethylene.

4. Films or structures according to claims from 1 to 3, characterized in that the cement-based material consists of at least one material usable in hydraulic binder compositions.

5. Film or structures according to claims from 1 to 4, characterized in that the cement-based material consists of Portland cement.

6. Films or structures according to claims 1 to 4, characterized in that the cement-based material is diatomite.

7. Films or structures according to claims 1 to 6, characterized in that said films or structures have a specific surface area of at least 0.25 m²/g respectively.

8. Hydraulic binder-based manufactured products containing the films or structures as claimed hereinabove in claims from 1 to 7 as reinforcement.

9. Process for the preparation of fibrillated films, or net-shaped structures according to the preceding claims from 1 to 7, consisting of the following operations:

(a) preparing a mix or blend of at least one film-forming and orientable synthetic polymer, with from 1—20% by weight on said mixture, of cement-based powdery material, and possibly but not necessarily, with from 0.05 to 0.5% b.w. of an expanding or blowing agent;

(b) transforming the mix or blend into a flat or tubular film;

(c) orienting said film in a longitudinal sense or in a prevailingly longitudinal sense, by means of a mechanical stretching, with stretching ratios ranging from 1:3 to 1:15 with the formation of an oriented film having a thickness comprised between 20 and 200 microns;

(d) fibrillating of the thus oriented film.


## Revendications

1. Pellicules de renforcement orientées et fibrillées ou structures recticulaires plates formées d'au moins un polymère synthétique orientable filmogène pouvant servir à renforcer les conglomérats à base de liant hydraulique, caractérisées en ce que lesdits pellicules ou structures contiennent à l'état incorporé de 1—20% en poids d'au moins une matière à base de ciment.

2. Pellicules ou structures selon la revendication 1, caractérisées en ce que le polymère synthétique consiste en polypropylène.

3. Pellicules ou structures selon la revendication 1, caractérisées en ce que le polymère synthétique est formé d'un mélange ou mixture de polypropylène avec jusqu'à 20% en poids de polyethylène basse densité.

4. Pellicule ou structure selon des revendications 1 à 3, caractérisées en ce que la matière à base de ciment est formée d'au moins une matière utilisable dans les compositions de liants hydrauliques.

5. Pellicules ou structures selon les revendications 1 à 4, caractérisées en ce que la matière à base de ciment est formée de ciment Portland.

6. Pellicule ou structure selon les revendications 1 à 4, caractérisées en ce que la matière à base de ciment est la diatomite.

7. Pellicules ou structure selon les revendications 1 à 6, caractérisées en ce que lesdites pellicules ou structures ont une aire spécifique d'au moins 0,25 m²/g respectivement.

8. Produits façonnées à base de liant hydraulique et contenant en pellicules ou structures telles que revendiquées ci-dessus dans les revendications 1 à 7 en tant que matière de renforcement.

9. Procédé de préparation de pellicules fibrillées ou structures reticulaires selon les revendications 1 à 7 précédentes comprenant les opérations suivantes:

a) la préparation d'un mélange ou mixture d'au moins un polymère synthétique orientable et filmogène contenant de 1—20% en poids dudit mélange de matière à base de ciment pulvérulente et éventuellement quoique non nécessairement, de 0,05 à 0,5% en poids d'un agent d'expansion ou de gonflement;

b) la transformation du mélange ou mixture en une pellicule tubulaire ou plate;

c) l'orientation de ladite pellicule selon une direction longitudinale ou principalement longitudinale, par étirage mécanique selon des taux d'étirage de 1/3 à 1/5 avec formation d'une pellicule orientée ayant une épaisseur comprise entre 20 et 200 microns.

d) la fibrillation de la pellicule ainsi orientée.

6

# 0 027 273

**Patentansprüche**

1. Faserige und orientierte Verstärkungsfilme oder flache netzförmige Strukturen aus zumindest einem filmbindenden orientierbaren synthetischen Polymeren, die bei ihrer Verwendung Konglomerate auf Basis eines hydraulischen Bindemittels verstärken, dadurch gekennzeichnet, daß diese Filme oder Strukturen 1 bis 20 Gew.-% zumindest eines Materials auf Zementbasis eingearbeitet enthalten.

2. Filme oder Strukturen gemäß Anspruch 1, dadurch gekennzeichnet, daß das Synthetische Polymere aus Polypropylen besteht.

3. Filme oder Strukturen gemäß Anspruch 1, dadurch gekennzeichnet, daß das synthetische Polymere aus einem Gemisch oder einer Mischung von Polypropylen mit bis zu 20 Gew.-% Polyäthylen niedriger Dichte besteht.

4. Filme oder Strukturen gemäß den Ansprüchen 1 bis 3, dadurch gekennzeichnet, daß das Material auf Zementbasis aus zumindest einem in hydraulischen Bindemittelzusammensetzungen verwendbaren Material besteht.

5. Filme oder Strukturen gemäß den Ansprüchen 1 bis 4, dadurch gekennzeichnet, daß das Material auf Zementbasis aus Portland-Zement besteht.

6. Filme oder Strukturen gemäß den Ansprüchen 1 bis 4, dadurch gekennzeichnet, daß das Material auf Zementbasis Kieselgur ist.

7. Filme oder Strukturen gemäß den Ansprüchen 1 bis 6, dadurch gekennzeichnet, daß die Filme oder Strukturen eine spezifische Oberfläche von zumindest 0,25 m$^2$/g besitzen.

8. Erzeugnisse auf Basis eines hydraulischen Bindemittels enthaltend die Filme oder Strukturen gemäß einem der Ansprüche 1 bis 7 als Verstärkungsmittel.

9. Verfahren zur Herstellung von faserigen Filmen oder netzförmigen Strukturen gemäß den vorhergehenden Ansprüchen 1 bis 7, bestehend aus den folgenden Maßnahmen:

(a) die Herstellung eines Gemisches oder einer Mischung von zumindest einem filmbindenden und orientierbaren synthetischen Polymeren mit 1 bis 20 Gew.-% dieser Mischung an einem pulverförmigen Material auf Zementbasis und gegebenenfalls, jedoch nicht notwendigerweise, mit 0,05 bis 0,5 Gew.-% eines Trieb- oder Blähmittels;

(b) die Überführung des Gemisches oder der Mischung in einen flachen oder röhrenförmigen Film;

(c) die Orientierung dieses Films in einer longitudinalen Richtung oder in einer überwiegend longitudinalen Richtung mit Hilfe einer mechanichen Streckung bei Streckungsverhältnissen im Bereich von 1:3 bis 1:15 unter Bildung eines orientierten Films mit einer Dicke zwischen 20 und 200 Micron;

(d) die Faserung des auf diese Weise orientierten Films.